# EUROPEAN PATENT APPLICATION

(11) **EP 2 100 716 A1**
(43) Date of publication of application: **16.09.2009**
(21) Application number: 08253992.5
(22) Date of filing: 12.12.2008
(51) Int. Cl.: B29C 45/14

(54) **Injection mold and method for making a housing using the injection mold**

(30) Priority: 14.03.2008 CN 200810300586
(71) Applicant: Shenzhen Futaihong Precision Industry Co., Ltd., Shenzhen City, Guangdong Province 518109 (CN); FIH (Hong Kong) Limited, Hong Kong (HK)
(72) Inventor: Wu, Kun-Tsan, Shindian City Taipei Hsien Taiwan 231 (CN); Tien, Li-Wen, Shindian City Taipei Hsien Taiwan 231 (CN); Hong, Chuan-Bao, ShenZhen City Guangdon Province 518109 (CN)
(74) Representative: Craven, Ian

(57) **Abstract**

An injection mold (10) comprises a female mold (20), a male mold (40) matching with the female mold (20), and a cutting portion (48) is positioned on either the female mold (20) or the male mold (40) positioning, a receiving slot (28) is defined in another said mold for accommodating the cutting portion (48).

## Description

### 1. Field of the Invention

The present invention relates to an injection mold and a method for making a housing using the injection mold and especially relates to an injection mold and a method for making a housing with soft layer using the injection mold.

### 2. Description of related art

The housing is one of the main components of electronic devices, such as telephones, computers and etc. Because molded articles have advantages of being light, low cost and anti-corrosion, housings for electronic devices are often made by injection molding.

To enable the housings to have a good touch feel, in the prior art, a soft layer, for example, leather or fabric is formed on the housing. When making such housing, the soft layer is firstly positioned into the mold. After injecting plastic material into the mold, the plastic material is cooled and attaches to the soft layer to form a semi-finished product. The semi-finished product is then removed from the mold and superfluous edges of the soft layer cut. However, the cutting process can be complicated, and the processing efficiency is low.

Therefore, there is room for improvement within the art.

### BRIEF DESCRIPTION OF THE DRAWINGS

FIG. 1 shows a cross-sectional view of an exemplary embodiment of the present injection mold in an opening state;

FIG. 2 shows a cross-sectional view of a housing making by the injection mold;

FIG. 3 shows a schematic view of a soft layer put in the injection mold;

FIG 4 shows a schematic view of the soft layer sticking inside the injection mold;

FIG. 5 shows a schematic view of closing the injection mold to cut the soft layer; and

FIG. 6 shows a schematic view of the injection mold injecting plastic material.

### DETAILED DESCRIPTION OF THE EXEMPLARY EMBODIMENTS

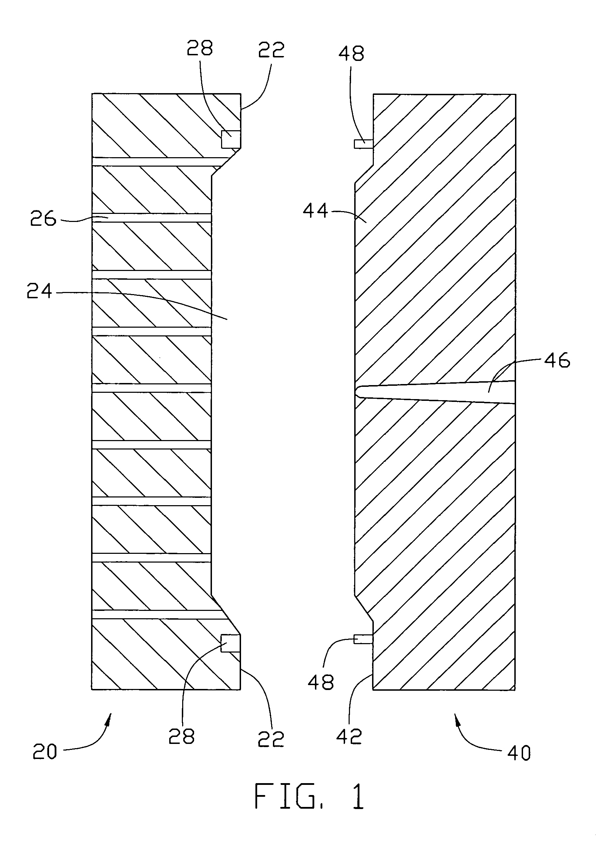

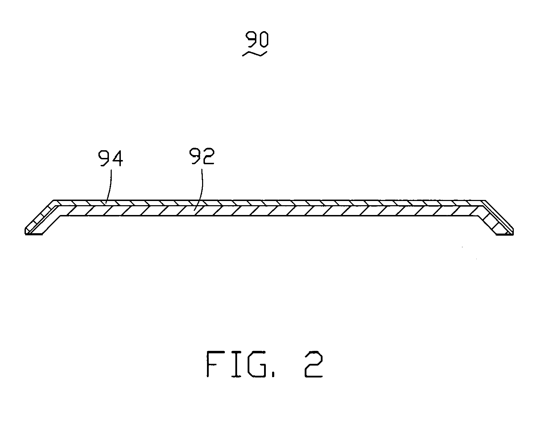

Referring to FIGS. 1 and 2, in an exemplary embodiment, an injection mold 10 is used to make a housing 90. The housing 90 includes a main body 92 and a soft layer 94 formed on the main body 92.

The injection mold 10 includes a female mold 20 and a male mold 40 corresponding to the female mold 20.

The female mold 20 includes a first joining surface 22 facing the male mold 40, a concave cavity 24 defined in the female mold 20 facing the male mold 40, a plurality of air suction holes 26 extending through the female mold 20, and a receiving slot 28 defined around the concave cavity 24. Each air suction hole 26 communicates with the concave cavity 24.

The male mold 40 includes a second joining surface 42 facing the female mold 20, a protruding portion 44 formed on the second joining surface 42, at least a runner 46 extending through the male mold 40, and at least a cutting portion 48 separately defined around the protruding portion 44. The cutting portion 48 may be a cutting mold with blades. The cutting portion 48 is smaller than the receiving slot 28, enabling the receiving slot 28 to accommodate the cutting portion 48. When the male mold 40 engages the female mold 20, the cutting portion 48 engages closely with a sidewall within the receiving slot 28.

A method for making the housing 90 by using the injection mold 10 may include following steps:

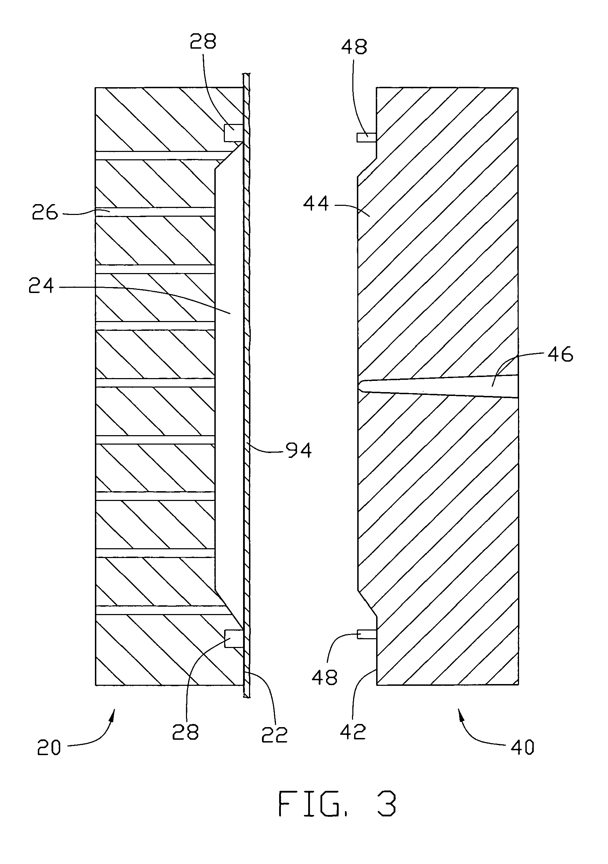

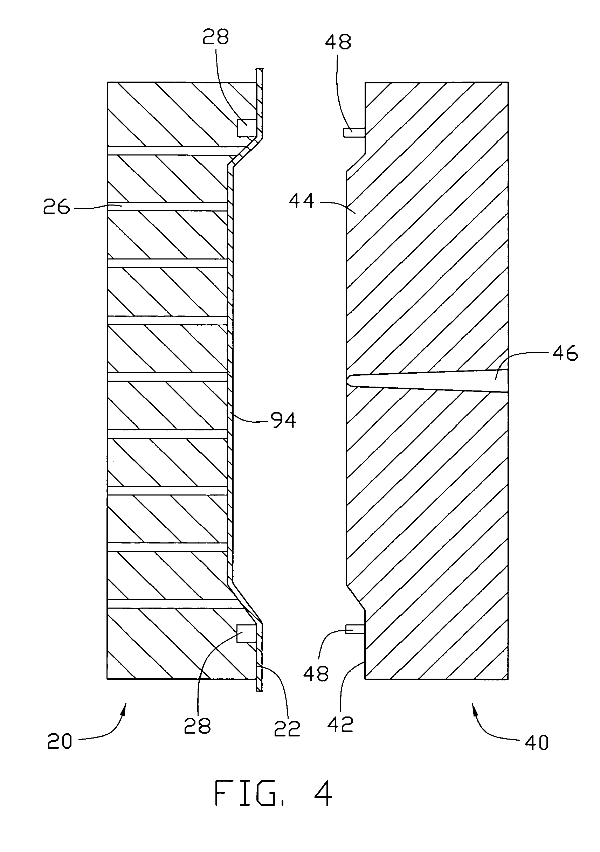

Referring to FIGS. 3 and 4, the soft layer 94 is put on the first joining surface 22 and encloses the concave cavity 24. Then, the soft layer 94 is drawn against the concave cavity 24 by vacuuming the concave cavity 24 through a plurality of air suction holes 26 using a vacuum generator (not shown), thereby making the soft layer 94 sticking to inside of the concave cavity 24. Meanwhile, the soft layer 94 covers the receiving slot 28.

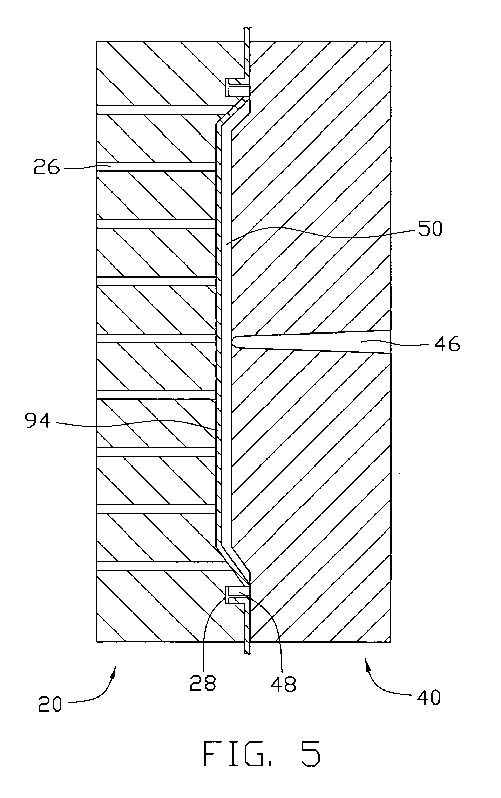

Referring to FIG. 5, the injection mold 10 is closed, and the cutting portion 48 of the male mold 40 engages into the receiving slot 28 for cutting superfluous edges of the soft layer 94. The male mold 40 and the female mold 20 define together a die chamber 50 therebetween.

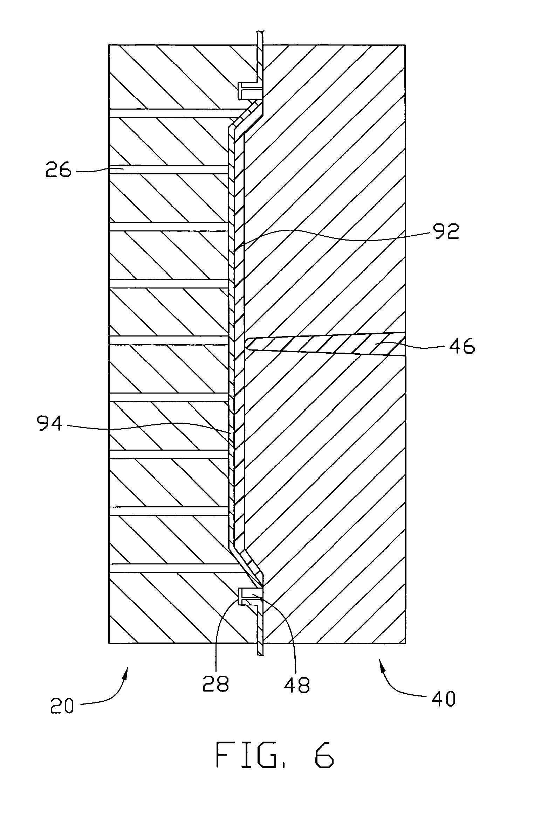

Referring to FIG. 6, melted material (e.g., plastic and/or silicone) is injected into the die chamber 50 through the runner 46 and attached to the soft layer 94. The housing 90 with the soft layer 94 is complete.

After the housing 90 is cooled, the housing 90 is removed from the injection mold 10.

In a further embodiment, the cutting portion 48 can be positioned on the female mold 20, and a receiving slot 28 can be defined in the male mold 40 and configured for accommodating the cutting portion 48 on the female mold 20.

It is to be understood, however, that even through numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. An injection mold comprising:
a female mold; and
a male mold corresponding to the female mold;
wherein a cutting portion is positioned on one of the female mold and the male mold, a receiving slot being defined in the other of the female mold and the male mold.

2. The injection mold as claimed in claim 1, wherein the cutting portion is positioned on the male mold, a concave cavity is defined in the female mold, and the receiving slot is defined around the concave cavity.

3. The injection mold as claimed in claim 2, wherein the cutting portion engages into the receiving slot.

4. The injection mold as claimed in claim 3, wherein the cutting portion is a cutting mold with blades.

5. The injection mold as claimed in claim 4, wherein a plurality of air suction holes are defined in and extend through the female mold.

6. A method for making a housing by an injection mold, comprising steps of:
providing an injection mold comprising:
a female mold; and
a male mold corresponding to the female mold;
wherein a cutting portion is positioned on one of the female mold and the male mold, a receiving slot being defined on the other of the female mold and the male mold;
putting a soft layer inside the female mold;
closing the injection mold, the cutting portion accommodated into the receiving slot to cut the soft layer;
injecting melted plastic material into the injection mold, the melted plastic material being attached to the soft layer for forming a housing; and
removing the housing from the injection mold.

7. The method for making a housing by an injection mold as claimed in claim 6, wherein the cutting portion is positioned on the male mold, a concave cavity is defined in the female mold, and the receiving slot is defined around the concave cavity.

8. The method for making a housing by an injection mold as claimed in claim 7, wherein the cutting portion engages into the receiving slot.

9. The method for making a housing by an injection mold as claimed in claim 8, wherein the cutting portion is a cutting mold with blades.

10. The method for making a housing by an injection mold as claimed in claim 8, wherein a plurality of air suction holes are defined in and extend through the female mold.
